Europäisches Patentamt

European Patent Office

Office européen des brevets

(11) Publication number: **0 387 105**
**A1**

## (12) EUROPEAN PATENT APPLICATION

(21) Application number: **90302620.1**

(22) Date of filing: **12.03.90**

(51) Int. Cl.⁵: **F16B 7/04, F16B 2/02**

(30) Priority: **10.03.89 GB 8905567**
**10.03.89 GB 8905549**

(43) Date of publication of application:
**12.09.90 Bulletin 90/37**

(84) Designated Contracting States:
**DE ES FR GB**

(71) Applicant: **NEWTEAM LIMITED**
**Brunel Road, Earlstrees Industrial Estate**
**Corby, Northants, NN17 2LS(GB)**

(72) Inventor: **Sanwell, Christopher John**
**8 Padwell Lane**
**Bushby Leicester(GB)**

(74) Representative: **Dawson, Elizabeth Ann et al**
**A.A. THORNTON & CO. Northumberland**
**House 303-306 High Holborn**
**London WC1V 7LE(GB)**

(54) Clamping assembly and variable position mechanism.

(57) A clamping assembly suitable for fixing to a rod or rail (10) comprises at least two clamp elements (12), joined by a flexible element each having a surface conforming to a portion of the surface of the rod or rail (10) and closure means (13) for closing the elements around the rail. The assembly may carry a variable position mechanism for varying the angular disposition of an article clamped to the rod or rail, comprising two members having opposing surfaces arranged to interengage at a plurality of angular orientations.

*Fig.1.*

Xerox Copy Centre

## Clamping assembly and variable position mechanism

A first aspect of the present invention relates to a clamping assembly and more particularly to a clamp assembly in which a slidable member is clamped to a rod.

A second aspect of this invention relates to a variable position mechanism whereby one member can be moved to one of a plurality of positions and at a different angle of rotation to a fixed member.

The clamp assembly of this invention is particularly suitable for clamping a shower head to a vertical rail for height adjustment. It will be appreciated that numerous other uses are possible, including, for example, adjusting the height of a mirror.

The variable position mechanism of the present invention is particularly suitable for varying the rotational disposition of a shower head. This is but one example of how the mechanism can be used.

The difficulty with clamping a movable member to a rail is that one risks defacing the surface of the rail when clamping the movable member due to the need to generate sufficient force to hold the member in position.

It is a first object of the present invention to provide a clamping arrangement which will reliably secure a movable member in a desired position on a rail without deforming the surface of the rail.

A first aspect of the present invention provides a clamp assembly suitable for fixing to a rod or rail comprising at least two clamp elements joined by a flexible element and each having a surface conforming to a portion of the surface of the rod or rail and closure means operable on the elements to bring their surfaces into contact with the rod or rail.

The clamp assembly of the present invention assures greater surface contact between the clamping members and the rod or rail than has heretofore been achieved in clamping assemblies of this type. The force between the clamping members and the rail is distributed over the contacting surfaces thereby minimising deformation of the rail.

In the preferred embodiment of the invention, two clamp members each present a portion projecting from the rail in use, which portions may be brought together by the closure means to bring the surfaces of the members into contact with the rod or rail.

Further clamp members, joined by flexible elements, may be provided between these two clamp members to surround the rod or rail in use. Alternatively there may be only two clamp members. In the case of a cylindrical rod each clamp member will have a surface defining part of a cylinder. Where only two members are provided they may be mirror images of each other and each have a surface defining a part cylinder.

The closure means may comprise a member which surrounds the projecting portions on the clamp members, and the projecting portions and closure member may have cooperating camming surfaces whereby turning the closure member will bring the projecting portions together.

An article to be secured to the rail, such as a shower head, may be secured to the clamping members in any suitable way, preferably using a variable position mechanism of the type to be described herein.

In shower heads, it has not previously been possible to achieve a reliable variable angular disposition of the shower head due to the relatively large forces imparted to the mechanism in use.

It is a second object of the present invention to permit a movable member to assume one of a plurality of angular positions with respect to a fixed member in a simple yet reliable manner.

Thus, a second aspect of this invention provides a variable position mechanism comprising first and second members, one of which is rotatable with respect to the other, the members having opposing surfaces which are shaped to interengage at a plurality of relative angular positions, and means resiliently biasing the members towards each other.

In the preferred embodiment of the variable position mechanism according to this invention, the first and second members carry teeth which extend radially with respect to the axis of rotation.

Features and advantages of the clamp assembly and variable position mechanism will become apparent from the following exemplary description of embodiments thereof when taken in conjunction with the accompanying drawings in which:

Figure 1 shows a front view partly in section of the layout of an adjustable shower head holder incorporating a clamp assembly according to the present invention;

Figure 2 shows a plan view of a clamping member used in the clamp assembly shown in Figure 1;

Figure 3 shows an end view of the clamping member shown in Figure 2;

Figure 4 shows an end view of clamping ring for use with the clamping member shown in Figure 2;

Figure 5 shows a sectional side view taken along the line A-A in Figure 4;

Figure 6 shows a shower head retaining assembly incorporating a variable position mechanism in accordance with the present invention;

Figure 7 shows a side view of one ratchet element of the mechanism of Figure 6; and

Figure 8 shows a side view of the other ratchet element of the mechanism of Figure 6.

The preferred embodiment of the present invention is a movable shower head the position of which is adjustable on a vertical cylindrical rail where it is clamped in position. In the drawings, the vertical rail is identified by the reference numeral 10 and the movable member is generally indicated by the reference numeral 11.

A clamping arrangement for clamping the member 11 in the desired position on the rail 10 comprises a clamping member 12 having a number of clamp elements to be described below and a closure member in the form of a cooperating manually movable clamping ring 13.

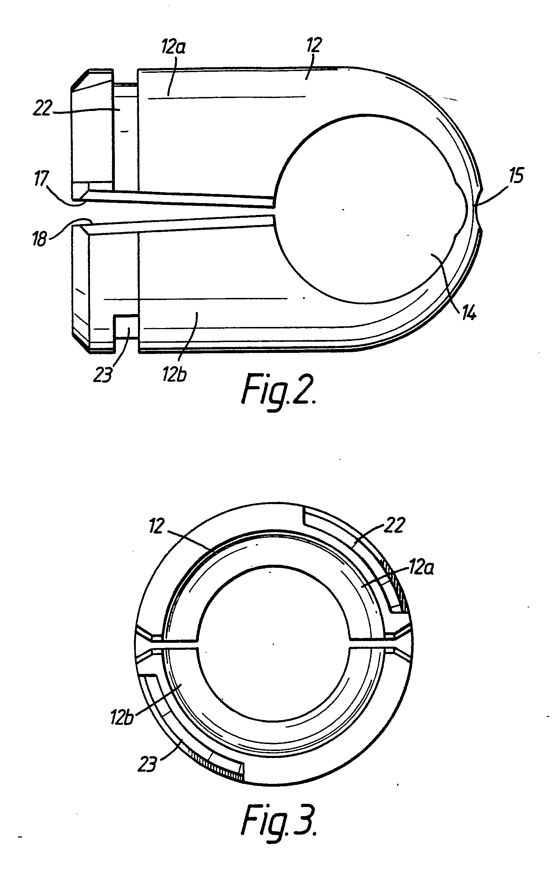

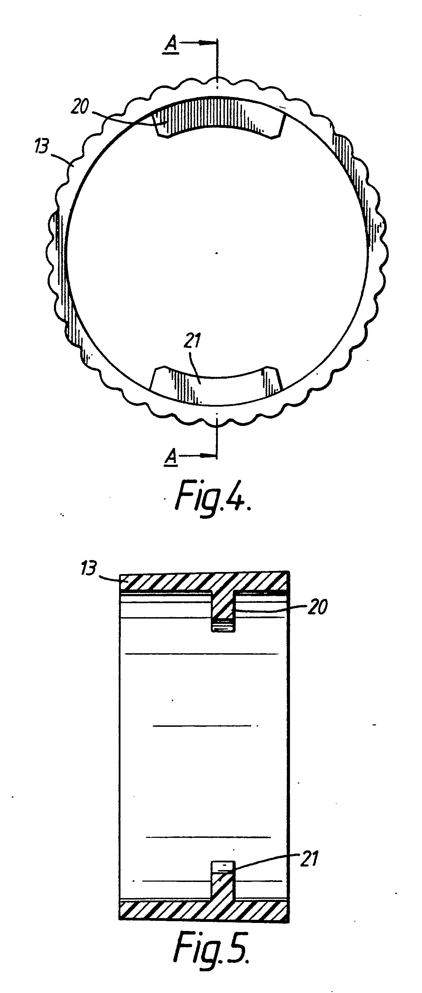

Referring now to Figures 2 and 3, these figures show the clamping member 12. The clamping member comprises clamp elements 12a, 12b having part cylindrical inner surfaces to provide a hole 14 which, as shown in Figure 2, is large enough to receive the rail 10 in a freely sliding condition. The clamping ring 13 shown in more detail in Figures 4 and 5 is arranged to cooperate with the clamping member 12 to deform the shape of the hole 14 to clamp the movable member on to the rail 10 at the desired location. In order to achieve this, the member 12 is provided with a weakened portion 15 which basically joins two elements 12a and 12b together and permits them to pivot about the weakened portion 15 when the cooperating clamping ring is rotated. If necessary, additional weakened portions can be provided at other positions around the circumference of the hole 14 to effectively provide more clamp elements and hence a larger contact area between the clamping member 12 and the rail 10.

Referring specifically to Figure 2, the portions 12a and 12b of the member 12 have projecting portions having opposed faces 17 and 18 respectively. These opposed faces are formed during manufacture of the member 12 to diverge from each other so as to ensure that when the portions 12a and 12b are moved towards each other when the clamping arrangement 13 is rotated, the opposed faces 17 and 18 of the portions 12a and 12b will not actually come in contact with each other as were this to happen effective clamping to the rail 10 could not be assured.

Rotation of the clamping ring 13 causes movement of the portions 12a and 12b of the clamping member 12 to two cooperating camming surfaces on the interior of the ring and exterior of the clamping member. If one now considers the structure of the clamping ring as shown in Figures 4 and 5, it will be seen that the preferred form of cam surface on the clamping ring is in fact two spaced arcuate sections 20 and 21. These arcuate sections cooperate with profiled grooves 22 and 23 respectively in the portions 12a and 12b of the clamping member 12.

The shape and configuration of the portions 20 and 21 and the profile of the grooves 22 and 23 are carefully designed so as to enable clamping to be achieved in one quarter turn of the ring 13. Each of the grooves has a first portion of constant radius which enables the portions 20, 21 on the clamping ring to be inserted into the groove. Thereafter the groove profile changes to a ramping portion of continuously changing radius whereby to cam the portions 12a and 12b of the member 12 towards each other and finally the groove profile returns to a constant radius portion but of larger radius than the first portion. This final constant radius portion accommodates wear in the parts.

It will be appreciated that while the grooves have been described as being in the clamping member and cooperating projections in the clamping ring, the grooves and camming portions could be reversed. It is preferred to injection mould the clamping member from a plastics material which could be any suitable engineering plastics material but it is preferably acetal.

The above described arrangement permits easy sliding movement of the movable member over the rail without defacing the surface of the rail. Further, the movable member can be clamped at any desired position on the rail by a simple quarter turn of the clamping ring 13. In view of the relatively large surface area used to clamp the movable member to the rail, no damage is done to the surface of the rail but an extremely reliable clamp is achieved.

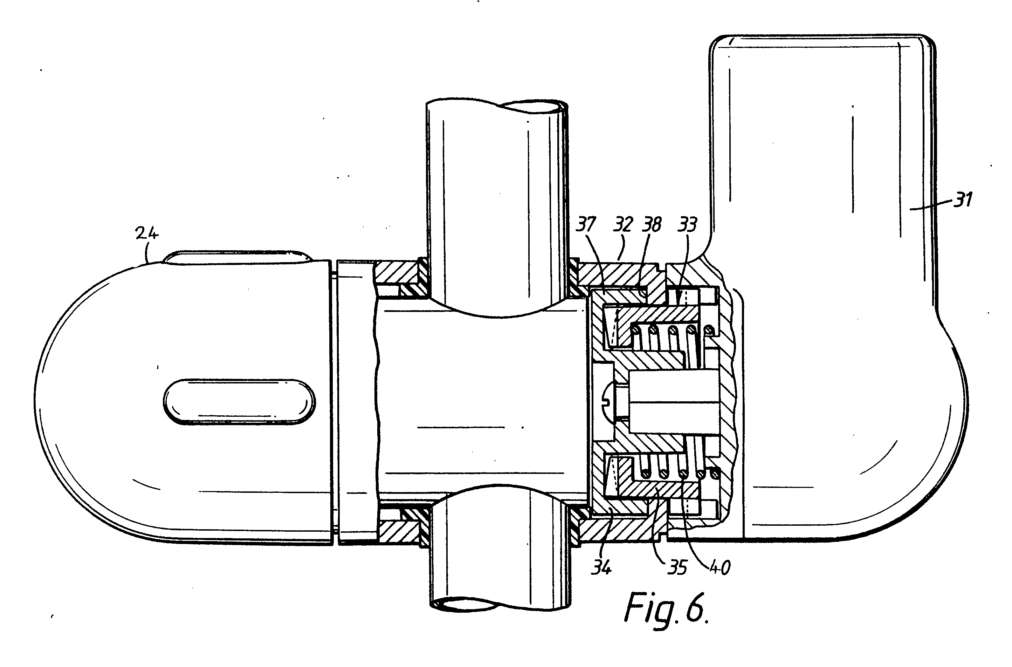

The movable member 11 may carry suitable means for holding an item to be attached to the rail 10, such as a shower head. The holding means may be attached to the clamping member via a variable position mechanism of the type to be described in more detail below with reference to Figures 6, 7 and 8.

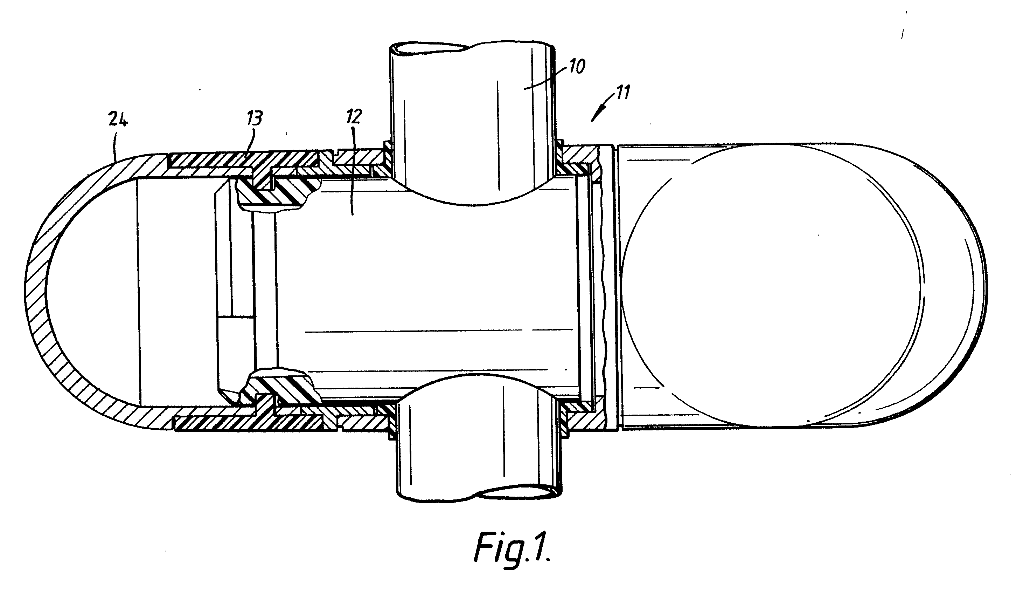

In the arrangement shown in figure 1 the ring 13 presents a generally cylindrical outer surface having ribs as shown in figure 4 so that it may be gripped manually to adjust the position of the assembly on the rod or rail. A cap member 24 encloses the ends of the member 12.

Figure 6 illustrates a second shower head retaining assembly incorporating a clamping assembly of the type described above and a variable position mechanism to be described below. In the arrangemenmt of figure 6 the cap member 24 incorporates the ring 13, (not shown) whereby rotation of the cap causes rotation of the ring, located within the cap. The ring and cap may be integrally formed.

In the retaining assembly of figure 6 an angularly movable member 31 is rotatably connected to a relatively fixed member 32 by means of a variable position mechanism generally indicated by the reference numeral 33.

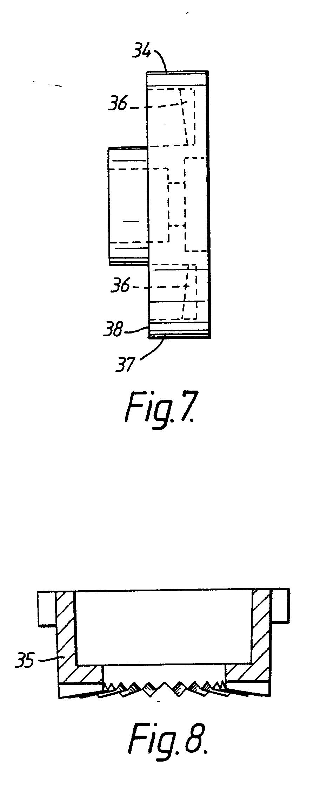

In the present case, the variable position mechanism is a ratchet mechanism incorporating two toothed wheels 34 and 35. As shown in Figure 6, the toothed wheel 34, shown in greater detail in Figure 7, is fixed to the angularly movable member 31 so as to rotate therewith. In this case, it is preferred to utilise a screwed or bolted connection. As is seen more clearly from Figure 32, the ratchet wheel 34 is provided with a ring of teeth 36 located within a shroud 37. The edge 38 of the shroud is arranged to contact a projecting surface on the relatively fixed member 32 to hold the angularly movable member 31 in engagement with the fixed member 32.

The further rachet wheel 35 which is shown in more detail in Figure 8 is located between the ratchet wheel 34 and the body of the movable member 31 but is fixed to the fixed member 32 in some convenient manner so as to prevent rotation of the wheel 35. In this case, it is preferred to prevent rotation of the wheel 35 by means of lugs extending from the periphery of the wheel and engaging with slots in a surface of the fixed member 32 or vice versa. Although the ratchet wheel is non-rotatable, it is capable of moving axially and is biassed by a spring 40 in a direction to bring the teeth of the ratchet wheel 35 into engagement with the teeth 36 of the ratchet wheel 34.

The teeth of the ratchet wheels are identical and are preferably at 15 degree intervals with a 45 degree slope on the teeth surfaces. As is seen clearly from Figures 7 and 8, the crests of the teeth slope inward due to the fact that the teeth are cut straight on radii of a circle. If a flat crest is preferred, the angle of the teeth would have to change progressively along the lines of the crest.

The above arrangement of spring loaded engagement between the ratchet wheels ensures a positive action from the ratchet while permitting relatively easy rotation between angular positions.

The use of cooperating toothed wheels in variable position mechanisms is not new. In conventional mechanisms using toothed wheels, the wheels are generally clamped together and moved with respect to each other by friction. Consequently, the tooth height used in these arrangements is relatively small. The movement of the wheels relative to each other leads to wearing of the teeth - a conventional arrangement using plastic toothed wheels would fail to operate satisfactorily after only 1-2 years normal usage. By using resilient biassing means, in this case a spring 40, to retain the toothed wheels together, "deeper" teeth can be used than in conventional mechanisms, since as the wheels are moved with respect to one another the spring is compressed thus relieving the friction between the two wheels. Consequently wear and tear is minimal on the wheels for as long as 10 years normal usage.

It will be appreciated that various shapes of teeth or other projections and recesses are possible within the scope of this invention, provided that they interengage positively at a plurality of angular positions.

The extent of angular movement of the member 31 with respect to the member 32 can be limited by a projection in one ratchet wheel engaging in a groove in the other wheel.

The material used for all the parts described above could be engineering plastics but it is preferred to use ABS material.

The above arrangement can be used in conjunction with the clamp assembly described above, i.e. the relatively fixed member could be secured to a rail by means of this type of clamp assembly. The movable member 31 may be moved by hand to vary its angular orientation and may incorporate a bracket for holding a shower head, not illustrated herein.

## Claims

1. A clamp assembly suitable for fixing to a rod or rail comprising at least two clamp elements (12a, 12b) joined by a flexible element (13) and each having a surface conforming to a portion of the surface of the rod or rail and closure means (13) operable on the elements to bring their surfaces into contact with the rod or rail (10).

2. A clamp assembly as claimed in claim 1 in which two of said clamp elements (12a, 12b) each present a portion projecting from the rail in use, which portions may be brought together by said closure means to bring the surfaces of the members into contact with the rod or rail.

3. A clamp assembly as claimed in claim 2 in which the closure means comprise a member (13) which surrounds the projecting portions (12a, 12b) in use.

4. A clamp assembly as claimed in claim 3 in which the closure member and the projecting portions have cooperating camming surfaces (20, 21, 22, 23) arranged such that rotation of the closure member around the projecting portions moves them towards each other.

5. A clamp assembly as claimed in claim 4, in which the projecting portions each have a groove for receiving at least part of the closure member.

6. A variable position mechanism comprising first and second members (34, 35), one of which is rotatable with respect to the other, the members having opposing surfaces which are shaped to interengage at a plurality of relative angular positions, and means (40) resiliently biassing the members towards each other.

7. A variable position mechanism as claimed in claim 6 in which the opposing surfaces of the first and second members carry cooperating recesses and projections.

8. A variable position mechanism as claimed in claim 7 in which the first and second members carry cooperating teeth (36).

9. A variable position mechanism as claimed in claim 8 in which the teeth extend radially with respect to the axis of rotation.

10. A variable position mechanism as claimed in claims 8 or 9 in which the teeth are arranged at 15° intervals.

11. A variable position mechanism as claimed in claim 10 in which the teeth have a slope of 45 degrees on their surfaces.

12. A variable position mechanism as claimed in any of claims 6 to 11 in which the first member (35) is fixed to a support structure (10) and the second member carries a movable element (31).

13. A variable position mechanism as claimed in claim 12 in which the first member (35) is secured to the support structure so as to be movable along the axis of rotation.

14. A variable position mechanism as claimed in claim 12 or 13 in which the first member is situated between the second member (34) and the movable element (31).

15. A variable position mechanism as claimed in claim 12, 13 or 14 in which the biassing means acts between the first member and the movable element.

16. An assembly for releasably securing a shower head to a slide rail comprising a clamp assembly as claimed in any of claims 1 to 5 carrying a variable position mechanism as claimed in any of claims 6 to 15.

Fig.1.

*Fig.2.*

*Fig.3.*

Fig.4.

Fig.5.

EP 0 387 105 A1

Fig. 6.

Fig. 7.

Fig. 8.

## DOCUMENTS CONSIDERED TO BE RELEVANT

EP 90302620.1

| Category | Citation of document with indication, where appropriate, of relevant passages | Relevant to claim | CLASSIFICATION OF THE APPLICATION (Int Cl⁵) |
|---|---|---|---|
| A | <u>DE - A1 - 2 435 932</u> (BILKO) * Totality * -- | 1,2,3, 4,5 | F 16 B 7/04 F 16 B 2/02 |
| A | <u>DE - B - 2 126 739</u> (MEER) * Fig. 1 * -- | 1,2,3 | |
| A | <u>GB - A - 2 037 360</u> (NADELLA) * Abstract * ---- | 1,2 | |

TECHNICAL FIELDS SEARCHED (Int Cl⁵)

F 16 B 2/00
F 16 B 7/00
F 16 B 9/00
F 16 B 12/00
F 16 L 25/00
F 16 L 37/00

The present search report has been drawn up for all claims

| Place of search | Date of completion of the search | Examiner |
|---|---|---|
| VIENNA | 10-05-1990 | RIEMANN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82